# EUROPÄISCHE PATENTSCHRIFT

(11) **EP 2 174 370 B1**
(45) Veröffentlichungstag und Bekanntmachung des Hinweises auf die Patenterteilung: **20.06.2012**
(21) Anmeldenummer: 08734976.7
(22) Anmeldetag: 03.04.2008
(51) Int. Cl.: H01M 8/02, H01M 8/24

(54) **EINZEL-BRENNSTOFFZELLE FÜR EINEN BRENNSTOFFZELLEN-STAPEL**
SINGLE FUEL CELL FOR A FUEL CELL STACK
PILE À COMBUSTIBLE INDIVIDUELLE POUR EMPILEMENT DE PILES À COMBUSTIBLE

(30) Priorität: 31.05.2007 DE 102007025479
(43) Veröffentlichungstag der Anmeldung: 14.04.2010
(73) Patentinhaber: Bayerische Motoren Werke Aktiengesellschaft, 80809 München (DE)
(72) Erfinder: HOEFLER, Thomas, 82194 Gröbenzell (DE); DURICIC, Dragoljub, 82024 Taufkirchen (DE); ZÜGNER, Stephan, 80636 München (DE)
(86) Internationale Anmeldenummer: PCT/EP2008/002634
(87) Internationale Veröffentlichungsnummer: WO 2008/145221

(56) Entgegenhaltungen:
- EP-A- 1 246 283
- WO-A-03/011794
- DE-A1- 10 238 859
- DE-A1- 10 245 475
- DE-A1-102004 047 539
- DE-A1-102004 058 117

## Beschreibung

Die Erfindung betrifft eine Einzel-Brennstoffzelle für einen Brennstoffzellen-Stapel, nach dem Oberbegriff des Anspruchs 1. Zum bekannten Stand der Technik wird auf die DE 10 2004 047 539 A1 verwiesen.

Derartige Einzel-Brennstoffzellen nach dem Oberbegriff des Anspruchs 1 werden als sog. Hochtemperatur-Brennstoffzellen (= SOFC = Solid oxide fuel cells) zur Erzielung eines nutzbaren elektrischen Spannungsniveaus in Form von Brennstoffzellenstapeln verschaltet und somit elektrisch in Reihe geschaltet. Dabei sind die hier sog. Zelleinheiten üblicherweise in einen metallischen Trägerrahmen, nämlich in die sog. Bipolarplatte, gefügt und es sind diese gefügten Einheiten aus Trägerrahmen/Bipolarplatte und Zelleinheit, die vorliegend als Einzel-Brennstoffzelle bezeichnet werden, zu einem Brennstoffzellenstapel (der oftmals sowie im weiteren auch nur "Brennstoffzelle" genannt wird) montiert.

Beim letztgenannten Montageschritt müssen die jeweiligen Einzel-Brennstoffzellen gegeneinander elektrisch isolierend abgedichtet werden, um sowohl ein unkontrolliertes Austreten von Brenngas und Luft als auch einen elektrischen Kurzschluss zwischen den Brennstoff-Einzelzellen zu vermeiden. Als sog. zweites Fügematerial, welches zur Erzeugung dieser Isolation bei diesem (letztgenannten) Montageschritt zwischen die Einzel-Brennstoffzellen insbesondere bzw. üblicherweise in deren Randbereich eingefügt wird, kommen kompressible Dichtungen, Glaskeramiklote, keramische Klebstoffe und metallische Reaktivlote in Kombination mit einer keramischen Isolationsschicht zur Anwendung.

Auch bei einem vorhergehenden Montage- oder Fügeschritt einer Brennstoffzelle, bei welchem die hier sog. Zelleinheiten in einen metallischen Trägerrahmen - die sog. Bipolarplatte - gefügt werden, wird ein hier sog. erstes Fügematerial zwischen einer Zelleinheit und letztlich dem metallischen Trägerrahmen eingebracht, wobei als erstes Fügematerial üblicherweise Glaslote oder ein metallisches Lot verwendet wird/werden.

Bei einer im Hinblick auf eine kurze Startzeit der Brennstoffzelle bzw. des Brennstoffzellen-Stapels günstigen Bauart sind die genannten Bipolarplatten aus dünnwandigen Blechen (mit einer Wandstärke in der Größenordnung von 0,1 - 0,5 mm) zusammengesetzt, und zwar - gattungsgemäß - aus einer ein Übertritts-Fenster aufweisenden Oberschale und einer an dieser im Randbereich anliegenden Unterschale. Die (erste) Fügeverbindung zwischen der Zelleinheit und der Oberschale bzw. dem das genannte Übertrittsfenster umgebenden sog. Fensterrahmenbereich derselben ist im genannten bekannten Stand als Überlappungsstoß (mit dazwischen liegendem ersten Fügematerial) ausgebildet, während die (zweite) Fügeverbindung zwischen den Einzelzellen bei diesem bekannten Stand der Technik als planparalleler Spalt (mit darin befindlichem zweiten Fügematerial) ausgeführt ist.

Konstruktionsbedingt wirken auf die beiden genannten Fügeverbindungen sowohl während des Herstellungsprozesses der Brennstoffzelle, der Lötprozesse und Schweißprozesse umfasst, als auch bei der Inbetriebnahme, d.h. beim Hochheizen sowie beim Abschalten und somit beim Abkühlen des Brennstoffzellenstapels (= der "Brennstoffzelle") Scherkräfte ein. Diese Scherkräfte können bei den keramischen Komponenten der Brennstoffzelle - hierunter fallen nicht-duktile Metalllote, Glaskeramiklote, keramische Klebstoffe sowie kompressible Dichtungen aus Keramikfasern und Glimmervarianten - und bei den Einzel-Brennstoffzellen in ihrer Gesamtheit zum Versagen führen.

Eine Abhilfemaßnahme für diese geschilderte Problematik jedenfalls (bzw. zumindest) hinsichtlich der Einzel-Brennstoffzellen aufzuzeigen, ist Aufgabe der vorliegenden Erfindung.
Die Lösung dieser Aufgabe besteht für eine Einzel-Brennstoffzelle nach dem Oberbegriff des Anspruchs 1 aus den im kennzeichnenden Teil dieses Anspruchs angegebenen Merkmalen. Vorteilhafte Aus- und Weiterbildungen sind Inhalt der Unteransprüche.

Vorgeschlagen ist, somit, die sog. Zelleinheit in einen im Querschnitt im wesentlichen L-förmigen Rahmen zu integrieren, da dieser Rahmen insbesondere thermomechanisch induzierte (Scher-)Spannungen über die die entsprechende Form herstellenden umgeformten Bereiche abschwächt, wodurch sowohl die (erste) Fügeverbindung als auch die Einzel-Brennstoffzelle in ihrer Gesamtheit weniger thermomechanisch belastet wird/werden, nachdem mechanische Spannungen im besagten Rahmen selbst abgebaut werden.

Die genannte (erste) Fügeverbindung kann als Fügematerial, das zwischen der Zelleinheit (und hierbei vorzugsweise der Elektrolytschicht) oder zwischen dem Anodensubstrat und dem Rahmen eingebracht ist, bspw. ein Metalllot oder ein Glaskeramiklot und/oder einen Keramikklebstoff und/oder eine Kontaktierpaste und/oder eine kompressible Dichtung oder dgl. aufweisen. Indem der besagte Rahmen in der Oberschale ausgebildet bzw. in diese eingearbeitet ist, wofür in den genannten Fensterrahmenbereich der Oberschale eine umlaufende und diesen besagten Rahmen bildende im wesentlichen L-förmige Sicke (oder dgl.) eingeformt ist, kann der Rahmen bzw. die diesen Rahmen bildende Sicke in der Oberschale während des Herstellungsprozesses auch als Lot-Reservoir und/oder als Lot-Überlaufzone fungieren.

Gesteigert wird dieser beschriebene durch den sog. Rahmen verursachte "Spannungsabbau"-Effekt noch, indem in einen sich an die/den umlaufende(n) Fläche oder Steg des L-förmigen Rahmens anschließenden Flächenabschnitt zumindest abschnittsweise (eine) weitere U- oder Z-förmige Prägestufe oder Sicke eingebracht ist. Auch diese Prägestufe(n) oder Sicke(n) kann/können während des Herstellungsprozesses der Brennstoffzelle als Lot-Reservoir und/oder Lot-Überlaufzone fungieren.

Im Sinne einer vorteilhaften Weiterbildung kann eine bzw. jede erfindungsgemäße Einzel-Brennstoffzelle, deren Randabschnitte derart gestaltet sind, dass mehrere Einzel-Brennstoffzellen jeweils unter Zwischenlage eines zweiten Fügematerials aufeinander stapelbar sind, in den Randabschnitten im wesentlichen umlaufend Sicken und Ausprägungen aufweisen, derart, dass eine Ausprägung in der Unterschale einer ersten Einzel-Brennstoffzelle unter Zwischenlage des zweiten Fügematerials in eine Sicke in der Oberschale einer zweiten Einzel-Brennstoffzelle, die unterhalb der ersten Einzel-Brennstoffzelle angeordnet ist und somit mit ihrer Oberschale der Unterschale der ersten Einzel-Brennstoffzelle zugewandt ist, hineinragt, Indem somit die für das Stapeln der Einzel-Brennstoffzellen bzw. von deren Bipolarplatten (bzw. hier Bipolar-Blechen) benötigten Dichtflächen mit Nuten und Stegen (in Form der genannten Sicken und Ausprägungen) versehen sind, die beim Fügevorgang unter Zwischenlage des zweiten Fügematerials ineinander greifen, ist nach dem Nut-Feder-Prinzip praktisch jegliche seitliche Verschiebung oder Mikro-Verschiebung zwischen den Einzel-Brennstoffzellen (in Richtung von deren Ebenen) zumindest stark behindert oder eingeschränkt, so dass gegenüber dem bekannten Stand der Technik nur noch deutlich verringerte Scherkräfte auf das hier sog. zweite Fügematerial zwischen zwei aufeinander gestapelten Einzel-Brennstoffzellen einwirken können. Als hier sog. zweites Fügematerial (in der zweiten Fügeverbindung) kommen (abermals) Glaskeramiklote, keramische Klebstoffe, Metalllote in Kombination mit keramischen Isolationsschichten sowie kompressible Dichtungen oder dgl. in Frage.

Im Sinne einer vorteilhaften Weiterbildung können dem hier sog. ersten Fügematerial und/oder dem hier sog. zweiten Fügematerial faserartige Materialien beigemischt sein, welche die mechanische Festigkeit der jeweiligen Fügeverbindung erhöhen bzw. die Auswirkung von ggf. weiterhin, jedoch in deutlich reduziertem Maße auftretenden Scherkräften in den einzelnen Fügeverbindungen reduzieren. Als Beispiele für dsoclhe faserartigen Materialien seien Zirkondioxidfasern (bspw. der Firma ZIRCAR vom Typ ZYBF3, 4 oder 5) oder Aluminiumoxidfasern (bspw. der Firma Polytec) oder siliziumoxidhaltige Fasern (bspw. der Firma Kager) genannt.

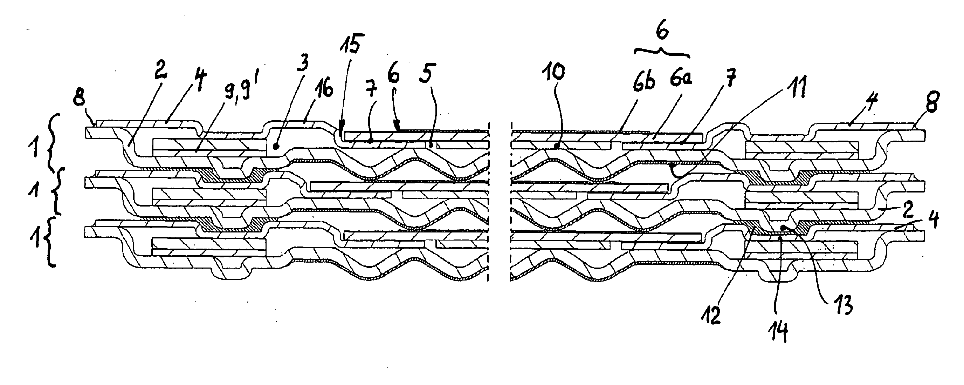

Im Folgenden wird die Erfindung anhand eines lediglich prinzipiell dargestellten Ausführungsbeispieles weiter erläutert, wobei die beigefügte einzige Figur einen Schnitt durch drei aufeinander gestapelte Brennstoff-Einzelzellen zeigt. Erfindungswesentlich können dabei sämtliche näher beschriebenen Merkmale sein.

Mit der Bezugsziffer 1 ist eine erfindungsgemäße Einzel-Brennstoffzelle in ihrer Gesamtheit gekennzeichnet, die im wesentlichen aus einer aus einem Blech geformten Unterschale 2, einer auf dieser unter Bildung eines Hohlraumes 3 aufgebrachten Oberschale 4 sowie einer auf dieser in der Umgebung eines sog. Übertrittsfensters 5, welches zentral in der Oberschale 4 vorgesehen ist, aufliegenden Zelleinheit 6 besteht. Diese Zelleinheit 6 ihrerseits besteht aus einer auf ein Substrat 6a, hier ein Anoden-Substrat 6a, aufgebrachten Kathoden-Elektrolyt-Anoden-Einheit 6b. Die Umgebung dieses Übertritts-Fensters 5 wird auch als Fensterrahmenbereich 4a der Oberschale 4 bezeichnet. In diesem Fensterrahmenbereich 4a ist die Zelleinheit 6 gasdicht mit der Oberschale 4 verbunden. Diese Fügeverbindung zwischen der Zelleinheit 6 und der Oberschale 4 ist weiter oben (vor der Beschreibung des Ausführungsbeispiels) als erste Fügeverbindung bezeichnet und enthält das so genannte erste Fügematerial 7.

In ihrem Umfangsbereich sind die Oberschale 4 und die Unterschale 2 über eine Schweißverbindung 8 miteinander verbunden. Im "innerhalb" dieses Verbindungsbereichs liegenden Randbereich ist ein hier zweilagiger Stützrahmen 9, 9' zwischen der Oberschale 4 und der Unterschale 2 zur Übertragung und Durchleitung von Presskräften in eine an späterer Stelle noch erläuterte zweite Fügeverbindung (mit einem zweiten Fügematerial 12) vorgesehen. Über diesen zweilagigen Stützrahmen 9, 9' ist die Oberschale 4 somit im genannten Randbereich auf der Unterschale 2 abgestützt.

Ferner ist, um den funktional erforderlichen elektrischen Kontakt zwischen der Zelleinheit 6 und der Unterschale 2 herzustellen, zwischen der der Kathoden-Elektrolyt-Anoden-Einheit 6b abgewandten Seite des Anoden-Substrats 6a und der hier im Querschnitt wellenförmig gestalteten Unterschale 2 ein Nickel-Netz 10 (oder dgl.) als elektrisches Kontaktierelement eingelegt. Als weitere oder alternative Kontaktierelemente können an dieser Stelle auch Pasten aus metallischen und/oder keramischen Werkstoffen eingesetzt sein, die im Betriebstemperaturbereich der Brennstoffzelle eine elektrisch leitfähige Verbindung zwischen der Unterschale 2 und der Zelleinheit 6 ausbilden. Im Übrigen kann ebenfalls zur Verbesserung der elektrischen Kontaktierung der Fensterrahmenbereich 4a der Oberschale 4 als perforiertes Blech ausgeführt sein.

Wie ersichtlich sind mehrere Einzel-Brennstoffzellen 1 übereinander gestapelt. Um im Bereich der jeweiligen Zelleinheiten 6 den funktional erforderlichen elektrischen Kontakt zwischen den Einzel-Brennstoffzellen 1 herzustellen, ist zumindest im Bereich jeder Zelleinheit 6 auf die der Oberschale 4 der darunter liegenden Einzel-Brennstoff 1 zugewandten Unterseite der Unterschale 2 jeder Einzel-Brennstoffzelle 1 eine Kathoden-Kontaktschicht 11 aufgebracht. Im ihrem Randbereich hingegen, in dem die übereinander gestapelten Einzel-Brennstoffzellen 1 quasi aufeinander liegen und aneinander gefügt sind - hierbei handelt es sich um die weiter oben sog. zweite Fügeverbindung unter Zwischenlage eines zweiten Fügematerials 12 - ist eine elektrische Isolierung gegeneinander erforderlich, was durch das geeignet ausgewählte zweite Fügematerial 12, das gleichzeitig als elektrischer Isolator wirkt, gewährleistet ist.

Im Bereich dieser genannten zweiten Fügeverbindung, d.h. in den weiter oben sog. Randbereichen der Einzel-Brennstoffzellen 1 sind diese mit im wesentlichen umlaufenden Ausprägungen 13 und Sicken 14 versehen, derart, dass eine Ausprägung 13 in der Unterschale 2 einer ersten Einzel-Brennstoffzelle 1 unter Zwischenlage des zweiten Fügematerials 12 in eine Sicke 14 in der Oberschale 4 einer zweiten Einzel-Brennstoffzelle 1, die unterhalb der ersten Einzel-Brennstoffzelle 1 angeordnet ist und somit mit ihrer Oberschale 4 der Unterschale 2 der ersten Einzel-Brennstoffzelle 1 zugewandt ist, hineinragt. Selbstverständlich ist auch eine (figürlich nicht dargestellte) entgegen gesetzte Ausgestaltung möglich, derart, dass die Oberschale 4 mit einer Ausprägung in eine Sicke der Unterschale hineinragt.

Was den Bereich der genannten ersten Fügeverbindung zwischen der Zelleinheit 6 und (letztlich) der Oberschale 4 betrifft, so ist hier die Zelleinheit 6 in einen im Querschnitt im wesentlichen L-förmigen Rahmen 15 integriert, an dem die Zelleinheit 6 zumindest abschnittsweise oder teilweise seitlich abgestützt bzw. durch den die Zelleinheit 6 zumindest abschnittsweise oder teilweise seitlich geführt ist. Im vorliegendem Ausführungsbeispiel ist dieser Rahmen 15 dabei direkt in die Oberschale 4 eingearbeitet, d.h. in den Fensterrahmenbereich 4a der Oberschale 4 ist hierfür eine umlaufende und diesen besagten Rahmen 15 bildende im wesentlichen L-förmige Sicke (oder dgl.) eingeformt. Ein besonderer Effekt dieser den im Querschnitt L-förmigen Rahmen bildenden Sicke ist der weiter oben (vor der Beschreibung des Ausführungsbeispiels) erläuterte Abbau von mechanischen Spannungen. Gesteigert werden kann dieser durch den Rahmen verursachte "Spannungsabbau"-Effekt noch, wenn in einen sich an die/den umlaufende(n) Fläche oder Steg des L-förmigen Rahmens anschließenden Flächenabschnitt zumindest abschnittsweise (eine) weitere U- oder Z-förmige Prägestufe 16 oder Sicke eingebracht ist/sind.

Zusammenfassend führt/führen der Rahmen 15 bzw. die den Rahmen bildende Sicken sowie ggf. weitere sich an diesen (wie genannt) anschließende Prägestufen 16 dazu, dass thermomechanisch induzierte (Scher)-Spannungen über die entsprechend umgeformten Bereiche hier der Oberschale 4 - alternativ eines separaten Bauteils als Rahmen - abgeschwächt werden und somit die genannte (erste) Fügeverbindung sowie die Einzel-Brennstoffzelle 1 in erheblich geringerem Umfang thermomechanisch belastet werden. Was die zweite Fügeverbindung in den Randbereichen der aufeinander gestapelten Einzel-Brennstoffzellen 1 betrifft, so ermöglicht die vorgeschlagene "Verzahnung" der Dichtflächen mittels Nut und Steg (=Ausprägung 13 und Sicke 14) mit dazwischen liegendem Fügematerial 12 eine kraftschlüssige und spannungsreduzierte Verbindung in den Trennebenen zwischen den Einzel-Brennstoffzellen 1 im Brennstoffzellen-Stapel. Die genannten geprägten Sicken können dabei so ausgestaltet sein, dass sie gleichzeitig als Reservoir oder Überlaufzone für beim Fügen schmelzflüssige oder pastöse Dicht- bzw. Fügematerialien dienen Vorteilhafterweise verstärkt das (vorgeschlagene) Prägen von/der Sicken den Kostenvorteil, den Bipolarpatten in Form dünnwandiger Bleche im Vergleich von mit spanenden Fertigungsschritten hergestellten Bipolarplatten aufweisen. Ein Zusatz von faserartigen Materialien zu den Fügematerialien verringert die Rissbildungsneigung in spröden Fügematerialien zusätzlich und dient gleichzeitig als Abstandshalter beim Fügevorgang, wenn es sich um pastöse oder beim Fügevorgang schmelzflüssige Dicht- bzw. Fügematerialien handelt. Zudem ist durch die gezielte Zugabe von Fasermaterialien zu den Fügematerialien eine lokale Einstellung von materialspezifischen und mechanischen Eigenschaften realisierbar.

Gesamthaft bieten die aufgezeigten Maßnahmen den Vorteil, mit kostengünstigen Verfahren und Materialien den Herstellprozess des Brennstoffzellenstapels robuster und dadurch qualitativ hochwertiger zu gestalten sowie gleichzeitig seine Schnellstart- und Thermozyklierbarkeit zu steigern. Zusätzlich erleichtern die Sicken und Prägungen das verschiebungssichere Einrichten der Bauteile beim Herstellen der Komponenten, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Einzel-Brennstoffzelle (1) für einen Brennstoffzellen-Stapel, aufweisend eine als Zelleinheit (6) bezeichnete, auf einem gasdurchlässigen Substrat (Anoden-Substrat 6a) aufgebrachte Kathoden-Elektrolyt-Anoden-Einheit (6b), wobei die Zelleinheit (6) von einer Bipolarplatte getragen wird, die aus einer aus einem metallischen Blech geformten Unterschale (2) und einer auf diese unter Bildung eines Hohlraumes (3) für die Zufuhr eines ersten Gases zu einer ersten Seite der Kathoden Elektrolyt-Anoden-Einheit (6b) aufgebrachten, ebenfalls aus einem metallischen Blech geformten Oberschale (4) besteht, welche ein Übertritts-Fenster (5) für das genannte erste Gas aufweist, mit deren das Übertritts-Fenster (5) umgebenden sog. Fensterrahmenbereich (4a) die Zelleinheit (6) gasdicht verbunden ist, wobei diese Zelleinheit (6) in einem im Querschnitt im wesentlichen L-förmigen Rahmen (15) liegt,
**dadurch gekennzeichnet, dass** der L-förmige Rahmen (15) in der Oberschale (4) ausgebildet ist und die Zelleinheit (6) unter Zwischenlage eines (ersten) Fügematerials (7) auf der dem Hohlraum (3) abgewandten Seite der Oberschale (4) aufliegt, und dass in einen sich an die/den umlaufende(n) Fläche oder Steg des L-förmigen Rahmens (15) anschließenden Flächenabschnitt der Oberschale (4) zumindest abschnittsweise (eine) weitere U- oder Z-förmige Prägestufe (16) oder Sicke eingebracht ist/sind.

2. Einzel-Brennstoffzelle nach Anspruch 1, deren Randbereich derart gestaltet ist, dass mehrere Einzel-Brennstoffzellen (1) jeweils unter Zwischenlage eines zweiten Fügematerials (12) aufeinander stapelbar sind,
**dadurch gekennzeichnet, dass** in den Randbereichen im wesentlichen umlaufend Sicken (14) und Ausprägungen (13) vorgesehen sind, derart, dass eine Ausprägung (13) in der Unterschale (2) einer ersten Einzel-Brennstoffzelle (1) unter Zwischenlage des zweiten Fügematerials (12) in eine Sicke (14) in der Oberschale (4) einer zweiten Einzel-Brennstoffzelle (1), die unterhalb der ersten angeordnet ist und somit mit ihrer Oberschale (4) der Unterschale (2) der ersten Einzel-Brennstoffzelle (1) zugewandt ist, hineinragt.

3. Einzel-Brennstoffzelle sowie Brennstoffzellen-Stapel nach einem der vorangegangenen Ansprüche,
**dadurch gekennzeichnet, dass** dem ersten Fügematerial (7) und/oder dem zweiten Fügematerial (12) faserartige Materialien beigemischt sind.

## Claims

1. An individual fuel cell (1) for a fuel cell stack, having a cathode-electrolyte-anode unit (6b) attached on a gas-permeable substrate (anode substrate 6a) and designated a cell unit (6), wherein the cell unit (6) is carried by a bipolar plate, which comprises a lower shell (2) formed from a metallic sheet and an upper shell (4), which is attached to said lower shell forming a cavity (3) to supply a first gas to a first side of the cathode-electrolyte-anode unit (6b) and is also formed from a metallic sheet and which has a through-window (5) for said first gas, to the so-called window frame region (4a) of which, which surrounds the through-window (5), the cell unit (6) is connected in a gas-tight manner, this cell unit (6) being located in a cross-sectionally substantially L-shaped frame, **characterised in that** the L-shaped frame (15) is formed in the upper shell (4) and the cell unit (6) rests on the side of the upper cell (4) remote from the cavity (3) with the interposition of a (first) joining material (7), and **in that** (a) further U-shaped or Z-shaped embossed step(s) (16) or bead(s) is/are introduced, at least in portions, in a surface portion of the upper shell (4) adjoining the peripheral face or web of the L-shaped frame (15).

2. An individual fuel cell according to claim 1, the edge region of which is formed in such a way that a plurality of individual fuel cells (1) can be stacked on top of one another, in each case, with the interposition of a second joining material (12), **characterised in that** substantially peripheral beads (14) and embossings (13) are provided in the edge regions in such a way that an embossing (13) in the lower shell (2) of a first individual fuel cell (1), with the interposition of the second joining material (12), projects into a bead (14) in the upper shell (4) of a second individual fuel cell (1), which is arranged below the first and therefore with its upper shell (4) faces the lower shell (2) of the first individual fuel cell (1).

3. An individual fuel cell and fuel cell stack according to any one of the preceding claims, **characterised In that** fibre-like materials are mixed with the first joining material (7) and/or the second joining material (12).

## Revendications

1. Pile à combustible individuelle (1) pour un empilage de piles à combustible comportant une unité cathode/électrolyte/anode (6b) appelée unité de cellule (6) appliquée sur un substrat perméable aux gaz (substrat d'anode 6a),
* l'unité de cellule (6) étant portée par une plaque bipolaire composée d'une coque inférieure (2) en une tôle métallique mise en forme et d'une coque supérieure (4) également en une tôle métallique mise en forme en constituant une cavité (3) pour l'alimentation d'un premier gaz sur un premier côté de l'unité cathode/électrolyte/anode (6b), cette coque supérieure (4) ayant une fenêtre de passage (5) pour le premier gaz, reliée de manière étanche aux gaz à la zone d'encadrement de fenêtre (4a) de l'unité de cellule (6), entourant la fenêtre de passage (5),
* cette unité de cellule (6) étant située dans un châssis (15) pratiquement à section en forme de L,
pile à combustible **caractérisée en ce que**
* le châssis (15) en forme de L est réalisé dans la coque supérieure (4) et l'unité de cellule (6) s'appuie avec interposition d'un premier matériau d'assemblage (7) sur le côté de la coque supérieure (4) non tourné vers la cavité (3), et
* dans un segment de surface de la coque supérieure (4) adjacent à la ou aux surfaces périphériques ou de l'entretoise périphérique du châssis en forme de L (15), au moins par segment, on a réalisé un ou d'autres échelons imprimés (16) ou moulures en forme de U ou de Z.

2. Pile à combustible individuelle selon la revendication 1, dont la zone de bord est formée pour que plusieurs piles à combustible individuelles (1) puissent être empilées avec interposition d'un second matériau d'assemblage (12),
**caractérisée en ce que**
les zones de bord sont munies principalement de moulures (14) ou d'impressions (13) périphériques de façon qu'une impression (13) dans la coque inférieure (2) d'une première pile à combustible individuelle (1) vienne avec interposition du second matériau d'assemblage (12) dans une moulure (14) de la coque supérieure (4) d'une seconde pile à combustible individuelle (1), située sous la première et pénétrant ainsi avec sa coque supérieure (4) tournée vers la coque inférieure (2) de la première pile à combustible (1).

3. Pile à combustible individuelle et empilage de piles à combustible selon l'une des revendications précédentes,
**caractérisée en ce qu'**
on mélange des matériaux fibreux au premier matériau d'assemblage (7) et/ou second matériau d'assemblage (12).
